# EUROPÄISCHE PATENTANMELDUNG

(11) **EP 3 747 568 A1**
(43) Veröffentlichungstag der Anmeldung: **09.12.2020**
(21) Anmeldenummer: 19177806.7
(22) Anmeldetag: 03.06.2019
(51) Int. Cl.: B21J 15/02, B21J 15/04, B23K 20/12, F16B 19/00, F16B 19/08, F16B 19/10

(54) **BLINDNIETBEFESTIGER-VERBINDUNG, VERFAHREN ZUM HERSTELLEN EINER BLINDNIETBEFESTIGER-VERBINDUNG UND BLINDNIETBEFESTIGER**

(71) Anmelder: GESIPA Blindniettechnik GmbH, 64546 Mörfelden-Walldorf (DE)
(72) Erfinder: Simon, Benjamin, 64546 Mörfelden-Walldorf (DE); Podlesak, Dr. Frank, 64546 Mörfelden-Walldorf (DE); Bamberger, Thomas, 64546 Mörfelden-Walldorf (DE)
(74) Vertreter: Keil & Schaafhausen Patentanwälte PartGmbB

(57) **Zusammenfassung**

Es wird eine Blindnietbefestiger-Verbindung angegeben mit einem Blindnietbefestiger (1), der einen Schaft (2) und einen Setzkopf (3) aufweist, und eine Fügegutanordnung (5), die eine Oberfläche (7) und eine Öffnung (4), durch die der Schaft (2) geführt ist, aufweist. Ferner wird ein Verfahren zum Herstellen einer derartigen Blindnietbefestiger-Verbindung und ein Blindnietbefestiger angeben.

Man möchte zusätzliche Verbindungseigenschaften ermöglichen.

Hierzu ist vorgesehen, dass der Setzkopf (3) und die Oberfläche (7) durch eine stoffschlüssige Verbindung (12) miteinander verbunden sind.

## Beschreibung

Die vorliegende Erfindung betrifft eine Blindnietbefestiger-Verbindung mit einem Blindnietbefestiger, der einen Schaft und einen Setzkopf aufweist, und einer Fügegutanordnung, die eine Oberfläche und eine Öffnung, durch die der Schaft geführt ist, aufweist.

Weiterhin betrifft die Erfindung ein Verfahren zum Herstellen einer Blindnietbefestiger-Verbindung mit einem Blindnietbefestiger, der einen Schaft und einen Setzkopf aufweist, und einer Fügegutanordnung, die eine Oberfläche und eine Öffnung, durch die der Schaft geführt ist, aufweist.

Schließlich betrifft die Erfindung einen Blindnietbefestiger mit einem Schaft, der einen Setzkopf und einen Umformbereich aufweist.

Die Erfindung ist bei unterschiedlichen Arten von Blindnietbefestigern anwendbar, beispielsweise Blindnieten, Blindnietmuttern oder Blindnietschrauben.

Beim Herstellen einer Blindnietbefestiger-Verbindung wird der Blindnietbefestiger mit seinem Schaft durch eine Öffnung im Fügegut geführt, bis der Setzkopf an der Oberfläche des Fügeguts anliegt. Danach wird der Schaft auf der anderen Seite des Fügeguts umgeformt, so dass sich ein Schließkopf bildet. Danach hält der Blindnietbefestiger im Fügegut. Der Blindnietbefestiger kann verwendet werden, um bei einem Fügegut, das mehrere Lagen oder plattenartige Elemente aufweist, diese Lagen oder Elemente miteinander zu verbinden. Der Blindnietbefestiger kann auch verwendet werden, um beispielsweise eine Befestigungsmöglichkeit für andere Elemente zu schaffen, wenn man im Fügegut auf andere Weise diese Befestigungsmöglichkeit nicht schaffen kann.

Der Erfindung liegt die Aufgabe zugrunde, eine Möglichkeit für zusätzliche Verbindungseigenschaften bereitzustellen.

Diese Aufgabe wird bei einer Blindnietbefestiger-Verbindung der eingangs genannten Art dadurch gelöst, dass der Setzkopf und die Oberfläche durch eine stoffschlüssige Verbindung miteinander verbunden sind.

Bei einer derartigen Blindnietbefestiger-Verbindung erfolgt also nicht nur eine rein mechanische Verbindung, bei der das Fügegut zwischen dem Setzkopf und dem Schließkopf angeordnet und in vielen Fällen eingeklemmt ist. Es ergibt sich vielmehr eine zusätzliche Verbindung, nämlich die stoffschlüssige Verbindung zwischen dem Setzkopf und der Oberfläche des Fügeguts. Über diese stoffschlüssige Verbindung können weitere Verbindungseigenschaften gefördert oder sogar erst ermöglicht werden.

In einer Ausgestaltung der Erfindung sind der Setzkopf und die Oberfläche miteinander verschweißt oder verlötet. Da der Blindnietbefestiger üblicherweise aus einem Metall gebildet ist, ist eine Schweiß- oder Lötverbindung möglich und gewährleistet eine sehr zuverlässige Verbindung zwischen dem Setzkopf und der Oberfläche.

In einer Ausführungsform der Erfindung ist zwischen dem Setzkopf und der Oberfläche ein Hilfsmaterial angeordnet, das mit dem Setzkopf und der Oberfläche eine stoffschlüssige Verbindung bildet. Das Hilfsmaterial kann insbesondere dann verwendet werden, wenn es ansonsten schwierig wäre, eine direkte Schweiß- oder Lötverbindung oder eine andere stoffschlüssige Verbindung zwischen dem Setzkopf und der Oberfläche des Fügematerials zu erzeugen. In diesem Fall wirkt das Hilfsmaterial sozusagen als Mittler.

In einer bevorzugten Ausgestaltung weist das Hilfsmaterial eine Erweichungstemperatur auf, die niedriger ist als eine Erweichungstemperatur der Oberfläche und/oder des Setzkopfes. In diesem Fall wird das Hilfsmaterial fließfähig oder zumindest teigig, bevor das Material der Oberfläche und/oder des Setzkopfes fließfähig oder teigig wird. Das Hilfsmaterial ist dann in der Lage, sich einerseits mit der Oberfläche und andererseits mit dem Setzkopf zu verbinden, um die stoffschlüssige Verbindung zwischen dem Setzkopf und der Oberfläche zu bilden.

In einer bevorzugten Ausgestaltung ist vorgesehen, dass das Hilfsmaterial Aluminium, Kupfer, Messing und/oder Bronze enthält. Das Hilfsmaterial kann ausschließlich oder überwiegend aus einem derartigen Material gebildet sein. Es kann sich auch um eine Legierung handeln, die eines oder mehrere dieser Materialien aufweist. Ein derartiges Hilfsmaterial schmilzt leichter bzw. wird leichter fließfähig oder teigig, als die übrigen Bestandteile des Blindnietbefestigers oder als die Oberfläche. Dementsprechend ist eine niedrige Temperatur erforderlich, um die stoffschlüssige Verbindung herzustellen.

In einer bevorzugten Ausgestaltung ist vorgesehen, dass die stoffschlüssige Verbindung elektrisch leitfähig ist. Mit der stoffschlüssigen Verbindung wird eine zuverlässige elektrische Verbindung bereitgestellt.

Die Aufgabe wird bei einem Verfahren der eingangs genannten Art dadurch gelöst, dass man zwischen dem Setzkopf und der Oberfläche eine erhöhte Temperatur erzeugt, indem man den Blindnietbefestiger in der Öffnung dreht und dabei den Setzkopf gegen die Oberfläche drückt.

Beim Drehen des Blindnietbefestigers gegenüber der Oberfläche des Fügeguts wird eine Reibung erzeugt, die wiederum Wärme erzeugt und damit zu einer erhöhten Temperatur führt. Die erhöhte Temperatur kann man zum Ausbilden der Verbindung zwischen dem Setzkopf und der Oberfläche des Fügeguts verwenden.

Hierbei ist bevorzugt, dass man eine Reibschweißverbindung oder Reiblötverbindung erzeugt. Zum Herstellen einer Reibschweißverbindung oder Reiblötverbindung ist eine höhere Temperatur erforderlich. Beim Reibschweißen sollte dabei sowohl das Material des Setzkopfes als auch das Material der Oberfläche des Fügeguts flüssig oder zumindest fließfähig werden. Bei einer Reiblötverbindung reicht es aus, wenn die entsprechenden Materialien teigig werden und somit aneinanderhaften.

In einer bevorzugten Ausgestaltung ist vorgesehen, dass man ein Hilfsmaterial zwischen dem Setzkopf und der Oberfläche anordnet und das Hilfsmaterial durch die Temperaturerhöhung in einen Zustand bringt, in dem es mit dem Setzkopf und der Oberfläche die stoffschlüssige Verbindung eingeht. Man kann das Hilfsmaterial so wählen, dass es bereits bei einer niedrigeren Temperatur als die Oberfläche des Fügeguts und/oder der Setzkopf fließfähig oder teigig wird, so dass man die stoffschlüssige Verbindung auch bei niedrigeren Temperaturen erzeugen kann.

Hierbei ist bevorzugt, dass man als Hilfsmaterial ein Aluminium, Kupfer, Messing und/oder Bronze enthaltenes Material verwendet. Die genannten Materialien können beispielsweise in einer Legierung vorliegen. Man kann das Hilfsmaterial auf den Setzkopf oder die Oberfläche des Fügeguts aufbringen. Man kann das Hilfsmaterial beispielsweise in Form eines Ringes vorsehen, der auf den Schaft des Blindnietbefestigers aufgesetzt ist und am Setzkopf anliegt.

In einer bevorzugten Ausgestaltung erzeugt man die Öffnung durch Fließlochbohren unter Rotation des Blindnietbefestigers und setzt die Rotation nach dem Kontakt zwischen dem Setzkopf und der Oberfläche fort, bis die stoffschlüssige Verbindung zwischen dem Setzkopf und der Oberfläche gebildet ist. In diesem Fall kann der Blindnietbefestiger die erforderliche Öffnung selbst erzeugen, indem seine Spitze, die beispielsweise an dem vom Setzkopf abgewandten Ende des Schaftes oder am entsprechenden Ende eines Zugdorns angeordnet sein kann, das Fügegut durchdringt. Wenn der Blindnietbefestiger das Fügegut durchdrungen hat, kann man die Rotation fortsetzen, bis die sich dabei ergebende Reibung zwischen Setzkopf und Fügegut genügend Wärme erzeugt hat, um die stoffschlüssige Verbindung zu bilden.

Die Aufgabe wird bei einem Blindnietbefestiger der eingangs genannten Art dadurch gelöst, dass am Setzkopf auf seiner dem Schaft zugewandten Seite eine Reibfläche mit einer Erhöhungen und Vertiefungen aufweisenden Oberflächenstruktur ausgebildet ist.

Mit einem derartigen Blindnietbefestiger kann man spezielle Blindnietbefestiger-Verbindungen der oben genannten Art mit einigen der oben genannten Verfahrens-/ Ausbildungen erzeugen. Die Reibfläche ist so ausgebildet, dass sie bei einer Rotation des Blindnietbefestigers gegenüber dem Fügegut mehr Wärme erzeugt als ein Setzkopf, der eine glatte, d.h. unmittelbar aus der üblichen Produktion stammende Oberfläche hat. Vielmehr ist bei einem derartigen Blindnietbefestiger die dem Fügegut zugewandte Seite besonders ausgestaltet, um mehr Reibungswärme zu erzeugen. Wenn Erhöhungen und Vertiefungen vorhanden sind, ergibt sich bei der gleichen Anpresskraft an den Erhöhungen ein erhöhter Anpressdruck, der wiederum zu einer stärkeren Reibung und damit zu einer erhöhten Wärmeerzeugung führt. Man kann einen derartigen Blindnietbefestiger bei dem oben beschriebenen Verfahren oder bei der oben beschriebenen Blindnietbefestiger-Verbindung führt. Es sollte aber bemerkt werden, dass die Blindnietbefestiger-Verbindung oder das Verfahren auch mit anderen Blindnieten möglich ist.

Vorzugsweise weist die Reibfläche ein Hilfsmaterial auf, das sich vom Material des Setzkopfes unterscheidet. Das Hilfsmaterial kann beispielsweise so gewählt werden, dass es bei einer Temperatur fließfähig oder teigig wird, die niedriger ist als eine Temperatur, bei der das Material des Setzkopfes und/oder der Oberfläche des Fügeguts fließfähig oder teigig wird. In diesem Fall kann man die stoffschlüssige Verbindung bereits bei der niedrigeren Temperatur erzeugen, was in der Regel Energie spart.

Vorzugsweise ist das Hilfsmaterial als Beschichtung oder als Zusatzelement auf der dem Schaft zugewandten Seite des Setzkopfes ausgebildet. Man kann das Hilfsmaterial beispielsweise in Form eines Ringes auf den Setzkopf aufbringen. In diesem Fall kann die Oberflächenstruktur der Reibfläche sowohl auf der dem Fügegut zugewandten Seite des Zusatzelementes als auch auf der dem Fügegut zugewandten Seite des Setzkopfes oder auch nur auf einer dieser beiden Seite ausgebildet sein. Wenn die Oberflächenstruktur mit Erhöhungen und Vertiefungen auf der dem Fügegut zugewandten Seite des Setzkopfes ausgebildet ist, dann entsteht primär eine Reibung zwischen dem Setzkopf und dem Zusatzelement.

Vorzugsweise enthält das Material Aluminium, Kupfer, Messing und/oder Bronze. Diese Materialien werden in der Regel bei einer Temperatur fließfähig oder teigig, die niedriger ist als die Temperatur, bei der der Setzkopf fließfähig oder teigig wird. Das Hilfsmaterial erleichtert somit die Ausbildung der stoffschlüssigen Verbindung.

Die Erfindung wird im Folgenden anhand von bevorzugten Ausführungsbeispielen in Verbindung mit der Zeichnung beschrieben. Hierin zeigen:
- Fig. 1: einen Blindnietbefestiger, der in eine Fügegutanordnung eingesetzt ist,
- Fig. 2: die Ausbildung einer Verbindung zwischen dem Blindnietbefestiger und dem Fügegut und
- Fig. 3: eine abgewandelte Ausführungsform des Blindnietbefestigers.

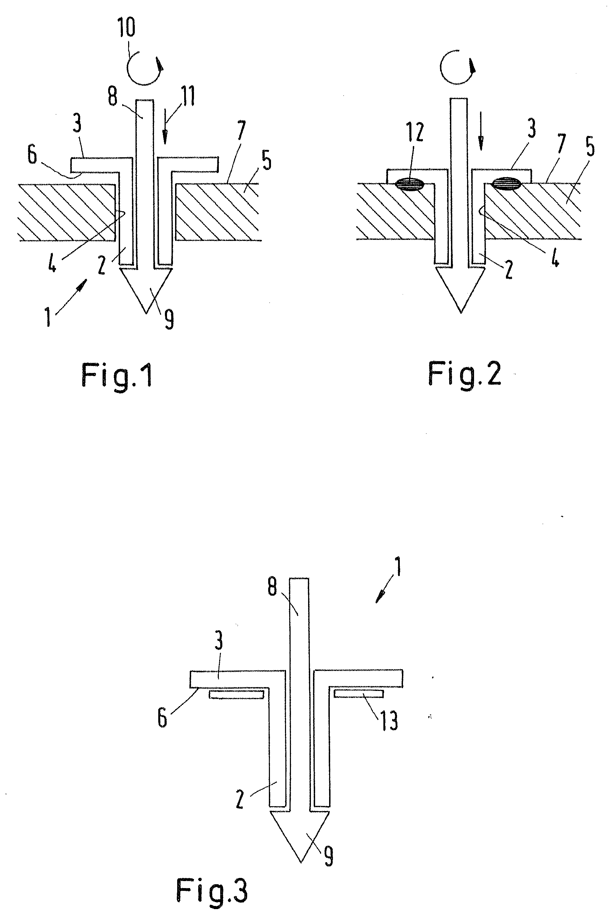

Fig. 1 zeigt einen Blindnietbefestiger in Form eines Blindniets 1, der einen Schaft 2, der auch als Hülse bezeichnet werden kann, aufweist. An einem Ende des Schaftes 2 ist ein Setzkopf 3 angeordnet. Zum Herstellen einer Blindnietbefestiger-Verbindung wird der Schaft 2 durch eine Öffnung 4 in einem Fügegut 5 geführt und zwar solange, bis eine dem Fügegut 5 zugewandte Seite 6 des Setzkopfes 3 an einer Oberfläche 7 des Fügeguts anliegt.

Im vorliegenden Fall ist der Blindniet 1 als selbstbohrender Blindniet ausgebildet. Zu diesem Zweck weist der Blindniet 1 einen Zugdorn 8 auf mit einer Spitze 9, die als Fließlochbohrer ausgebildet ist.

Um die Öffnung 4 zu erzeugen, wird der Blindniet 1 in Rotation gesetzt, was durch einen Pfeil 10 dargestellt ist. Gleichzeitig wird eine Kraft auf den Blindniet 1 in Richtung auf das Fügegut 5 aufgebracht, was durch einen Pfeil 11 dargestellt ist. Durch die Rotation des Blindniets 1 wird eine entsprechende relative Rotationsbewegung zwischen der Spitze 9, also dem Fließlochbohrer, und dem Fügegut 5 erzeugt. Diese Rotationsbewegung erzeugt Wärme, die zu einer Erhöhung der Temperatur des Fügeguts 5 führt. Das Fügegut wird dann im Bereich der Spitze 9 fließfähig oder zumindest teigig, so dass die Spitze 9 das Fügegut 5 durchdringen kann.

Im vorliegenden Fall wird die Rotationsbewegung (Pfeil 10) unter Beibehaltung der Druckkraft (Pfeil 11) fortgesetzt und zwar auch dann und gerade dann, wenn der Setzkopf 3 mit seiner Unterseite 6 an der Oberfläche 7 des Fügeguts 5 anliegt.

Durch die Rotation des Blindniets 1 gegenüber dem Fügegut 5 entsteht dann eine Reibung zwischen der Unterseite des Setzkopfs 3 und der Oberfläche 7 des Fügeguts 5. Diese Reibung führt zu einer Erzeugung von Wärme und damit zu einer Temperaturerhöhung. Die Temperatur wird dann so weit erhöht, dass das Material der Oberfläche 7 des Fügeguts 5 und/oder das Material der Unterseite 6 des Setzkopfes 3 fließfähig oder zumindest teigig wird. Sobald die entsprechende Temperatur erreicht ist, verbindet sich das Material an der Unterseite des Setzkopfes 3 und das Material an der Oberseite 7 des Fügeguts 2, so dass eine stoffschlüssige Verbindung entsteht.

Wenn der Setzkopf 3 und das Fügegut 5 aus einem Metall gebildet sind, dann kann diese stoffschlüssige Verbindung als Schweißverbindung oder als Lötverbindung ausgebildet sein. Dies hängt davon ab, welche Temperatur tatsächlich durch die Rotation des Setzkopfes 3 gegenüber der Oberfläche 7 des Fügeguts 5 erreicht wird. Wenn die Materialien fließfähig werden, ergibt sich eine Schweißverbindung, also eine Reibschweißverbindung. Wenn die Materialien nur einen teigigen Zustand erreichen, ergibt sich eine Reiblötverbindung.

In beiden Fällen ergibt sich eine elektrisch leitende Verbindung, so dass ein Strom von dem Fügegut 5 über den Setzkopf 3 zum Schaft 2 oder umgekehrt fließen kann. Eine derartige elektrische Verbindung ist in manchen Fällen gewünscht oder erforderlich.

Der Blindnietbefestiger kann auch auf andere Weise ausgebildet sein, beispielsweise als Blindnietmutter oder als Blindnietschraube. Die stoffschlüssige Verbindung zwischen dem Setzkopf 3 und der Oberfläche 7 des Fügeguts 5 wird dann aber auf gleiche Weise ausgebildet.

Um die notwendige Reibungswärme zu erzeugen, muss zwischen dem Setzkopf 3 und dem Fügegut ein entsprechend großer Reibwiderstand vorhanden sein. Ein derartiger Reibwiderstand ergibt sich in vielen Fällen bereits dann, wenn man einen "normalen" Setzkopf verwendet, der bei der Massenproduktion eines Blindniets entsteht.

Sollte dies nicht ausreichen, kann man die Unterseite 6 des Setzkopfes 3 auch speziell ausgestalten, beispielsweise mit einer Oberflächengeometrie, die Erhöhungen und Vertiefungen aufweist. In diesem Fall liegt der Setzkopf nicht mit seiner gesamten Flächenausdehnung am Fügegut 5 an, sondern nur mit den jeweiligen Erhöhungen. Dadurch erzeugt man bei Verwendung der gleichen Anpresskraft einen höheren Anpressdruck auf die Bereiche des Setzkopfes 3, die an der Oberfläche 7 des Fügeguts 5 anliegen, und damit eine erhöhte Reibung, die wiederum zu einer erhöhten Wärmeerzeugung führen.

Die Oberflächenstruktur kann beispielsweise im Querschnitt eine Dreieck- oder Sägezahn-Form aufweisen. Es ist auch möglich, die Vertiefungen durch Prägen oder dergleichen zu erzeugen.

Fig. 2 zeigt die erzeugte stoffschlüssige Verbindung 12.

Fig. 3 zeigt eine abgewandelte Ausbildung eines Blindniets 1, mit dem die in der Darstellung der Fig. 2 dargestellten stoffschlüssigen Verbindung 12 erleichtert werden kann. Gleiche Elemente wie in Fig. 1 und 2 sind mit den gleichen Bezugszeichen versehen.

An der Unterseite 6 des Setzkopfes 3 ist ein Hilfsmaterial 13 vorgesehen, das im vorliegenden Ausführungsbeispiel als Ring ausgebildet ist, der auf dem Schaft 2 des Blindniets 1 aufgesetzt ist.

Das Hilfsmaterial 13 kann auch als Beschichtung auf die Unterseite 6 des Setzkopfes 3 aufgebracht sein.

Das Hilfsmaterial 13 ist so ausgebildet, dass es bei einer Temperatur fließfähig oder teigig wird, die kleiner ist als eine Temperatur, bei der das Material des Setzkopfes 3 und/oder das Material des Fügeguts 5 fließfähig oder teigig wird. Beispielsweise kann das Hilfsmaterial 13 Aluminium, Kupfer, Messing und/oder Bronze enthalten, beispielsweise in Form einer Legierung.

Wenn der Setzkopf 3 gegenüber dem Fügegut 5 gedreht wird, ergibt sich dann eine Reibung zwischen dem Hilfsmaterial 13 und dem Fügegut 5 und/oder eine Reibung zwischen der Unterseite 6 und dem Hilfsmaterial 13. Die dabei entstehende Wärme führt zu einer Temperaturerhöhung des Hilfsmaterials 13. Allerdings sind die Wärmeverluste durch Ableitung geringer als bei der Reibung unmittelbar zwischen dem Setzkopf 3 und dem Fügegut 5, so dass man relativ schnell eine Temperatur erreicht, bei der das Hilfsmaterial 13 in der Lage ist, die Unterseite 6 des Setzkopfes 3 mit der Oberfläche 7 des Fügeguts 5 stoffschlüssig zu verbinden.

Das Hilfsmaterial 13 kann auch durch einen Klebstoff gebildet sein, der bei einer erhöhten Temperatur aktiviert wird. Auch in diesem Fall wird die erhöhte Temperatur durch Reibung erzeugt, wenn man den Blindniet 1 gegenüber dem Fügegut 5 dreht und dabei den Setzkopf 3 an die Oberfläche 7 des Fügeguts 5 andrückt.

Das Hilfsmaterial 13 ist vorzugsweise so ausgebildet, dass es die oben erwähnte elektrisch leitfähige Verbindung zwischen dem Blindniet 1, genauer gesagt dem Setzkopf 3, und dem Fügegut 5 herstellt.

Die oben erwähnte Reibfläche mit der Oberflächenstruktur aus Erhöhungen und Vertiefungen kann auch bei der Ausgestaltung nach Fig. 3 an der Unterseite 6 des Setzkopfes 3 ausgebildet sein. Diese Oberflächengestaltung kann aber auch an der dem Fügegut 5 zugewandten Seite des Hilfsmaterials 13 ausgebildet sein oder auch an der Seite des Hilfsmaterials 13, die am Setzkopf 3 anliegt. Selbstverständlich können auch sowohl der Setzkopf 3 als auch das Hilfsmaterial 13 entsprechende Oberflächengestaltungen aufweisen, die zu einer vermehrten Wärmeproduktion durch Reibung führen.

In allen Fällen geht man so vor, dass man nach Erreichen der Temperatur, in der die beteiligten Elemente, also der Setzkopf 3 und Fügegut 5 oder Setzkopf 3, Hilfsmaterial 13 und Fügegut 5, teigig oder fließfähig werden, mit der Rotation des Blindniets 1 aufhört und solange die Anpresskraft aufrechterhält, also den Setzkopf 3 weiter auf die Oberfläche 7 des Fügeguts 5 drückt, bis die Fügestelle so weit abgekühlt ist, dass sich sämtliche Komponenten und Komponententeile wieder im festen Zustand befinden. Gleichzeitig kann man beim oder nach dem Abkühlen einen Schließkopf ausbilden.

Dargestellt ist ein Fügegut 5, das aus einer einzigen Lage oder Schicht besteht. Man kann den Blindniet 1 aber auch verwenden, um mehrere Lagen oder Schichten des Fügeguts 5 miteinander zu verbinden.

Die Ausbildung des Schließkopfes ist nicht näher dargestellt. Hierzu weist der Schaft 2 einen Umformbereich auf der Seite des Schafts 2 auf, die aus dem Fügegut 5 auf der der Oberfläche 7 gegenüberliegenden Seite herausragt.

## Patentansprüche

1. Blindnietbefestiger-Verbindung mit einem Blindnietbefestiger (1), der einen Schaft (2) und einen Setzkopf (3) aufweist, und einer Fügegutanordnung (5), die eine Oberfläche (7) und eine Öffnung (4), durch die der Schaft (2) geführt ist, aufweist, **dadurch gekennzeichnet, dass** der Setzkopf (3) und die Oberfläche (7) durch eine stoffschlüssige Verbindung (12) miteinander verbunden sind.

2. Blindnietbefestiger-Verbindung nach Anspruch 1, **dadurch gekennzeichnet, dass** der Setzkopf (3) die Oberfläche (7) miteinander verschweißt oder verlötet sind.

3. Blindnietbefestiger-Verbindung nach Anspruch 1 oder 2, **dadurch gekennzeichnet, dass** zwischen dem Setzkopf (3) und der Oberfläche (7) ein Hilfsmaterial (13) angeordnet ist, das mit dem Setzkopf (3) und der Oberfläche (7) eine stoffschlüssige Verbindung (12) bildet.

4. Blindnietbefestiger-Verbindung nach Anspruch 3, **dadurch gekennzeichnet, dass** das Hilfsmaterial (3) eine Erweichungstemperatur aufweist, die niedriger ist als eine Erweichungstemperatur der Oberfläche (7) und/oder des Setzkopfes (3).

5. Blindnietbefestiger-Verbindung nach Anspruch 3 oder 4, **dadurch gekennzeichnet, dass** das Hilfsmaterial (13) Aluminium, Kupfer, Messing und/oder Bronze enthält.

6. Blindnietbefestiger-Verbindung nach einem der Ansprüche 1 bis 5, **dadurch gekennzeichnet, dass** die stoffschlüssige Verbindung (12) elektrisch leitfähig ist.

7. Verfahren zum Herstellen einer Blindnietbefestiger-Verbindung mit einem Blindnietbefestiger (1), der einen Schaft (2) und einen Setzkopf (3) aufweist, und einer Fügegutanordnung (5), die eine Oberfläche (7) und eine Öffnung (4), durch die der Schaft (2) geführt ist, aufweist, **dadurch gekennzeichnet, dass** man zwischen dem Setzkopf (3) und der Oberfläche (7) eine erhöhte Temperatur erzeugt, indem man den Blindnietbefestiger (1) in der Öffnung (4) dreht und dabei den Setzkopf (3) gegen die Oberfläche (7) drückt.

8. Verfahren nach Anspruch 7, **dadurch gekennzeichnet, dass** man eine Reibschweißverbindung oder Reiblötverbindung erzeugt.

9. Verfahren nach Anspruch 7 oder 8, **dadurch gekennzeichnet, dass** man ein Hilfsmaterial (13) zwischen dem Setzkopf (3) und der Oberfläche (7) anordnet und das Hilfsmaterial (13) durch die Temperaturerhöhung in einen Zustand bringt, in dem es mit dem Setzkopf (3) und der Oberfläche (7) die stoffschlüssige Verbindung (12) eingeht.

10. Verfahren nach Anspruch 9, **dadurch gekennzeichnet, dass** man als Hilfsmaterial (13) ein Aluminium, Kupfer, Messing und/oder Bronze enthaltendes Material verwendet.

11. Verfahren nach einem der Ansprüche 7 bis 10, **dadurch gekennzeichnet, dass** man die Öffnung (4) durch Fließlochbohren unter Rotation des Blindnietbefestigers (1) erzeugt und die Rotation fortsetzt, bis die stoffschlüssige Verbindung (12) zwischen dem Setzkopf (3) und der Oberfläche (7) gebildet ist.

12. Blindnietbefestiger (1) mit einem Schaft (2), der einen Setzkopf (3) und einen Umformbereich aufweist, **dadurch gekennzeichnet, dass** am Setzkopf (3) auf seiner dem Schaft (2) zugewandten Seite eine Reibfläche (6) mit einer Erhöhungen und Vertiefungen aufweisenden Oberflächenstruktur ausgebildet ist.

13. Blindnietbefestiger nach Anspruch 12, **dadurch gekennzeichnet, dass** die Reibfläche (6) ein Hilfsmaterial (13) aufweist, das sich vom Material des Setzkopfes (3) unterscheidet.

14. Blindnietbefestiger nach Anspruch 13, **dadurch gekennzeichnet, dass** das Hilfsmaterial (13) als Beschichtung oder als Zusatzelement auf der dem Schaft (2) zugewandten Seite des Setzkopfes (3) ausgebildet ist.

15. Blindnietbefestiger nach Anspruch 13 oder 14, **dadurch gekennzeichnet, dass** das Hilfsmaterial (13) Aluminium, Kupfer, Messing und/oder Bronze enthält.
